# EUROPÄISCHE PATENTANMELDUNG

(11) **EP 4 442 350 A1**
(43) Veröffentlichungstag der Anmeldung: **09.10.2024**
(21) Anmeldenummer: 23166529.0
(22) Anmeldetag: 04.04.2023
(51) Int. Cl.: B01D 53/14, C01B 3/00, C01B 32/50

(54) **VERFAHREN ZUR ABTRENNUNG VON KOHLENDIOXID AUS EINEM ROHWASSERSTOFFPRODUKT**

(71) Anmelder: L'AIR LIQUIDE, SOCIETE ANONYME POUR L'ETUDE ET L'EXPLOITATION DES PROCEDES GEORGES CLAUDE, 75007 Paris (FR)
(72) Erfinder: Schmidt, Sophia, 60439 Frankfurt am Main (DE); Linicus, Matthias, 60439 Frankfurt am Main (DE)
(74) Vertreter: Air Liquide

(57) **Zusammenfassung**

Die Erfindung betrifft ein Verfahren zur Abtrennung von Kohlendioxid aus einem Rohwasserstoffproduktstrom, zur Erzeugung eines Wasserstoffproduktstroms und eines Kohlendioxidproduktstroms. Das Verfahren beinhaltet die Absorption von Kohlendioxid in einer Absorptionsstufe in einem Absorptionsmittel und nachfolgende Desorption des Kohlendioxids aus dem beladenen Absorptionsmittel in einer Mehrzahl von Druckentspannungsstufen. Erfindungsgemäß werden aus den Druckentspannungsstufen abgezogene Kohlendioxidteilströme zu einem Kohlendioxidgesamtstrom zusammengeführt, und dabei in einer Mehrzahl in Serie geschalteter Kompressionsstufen verdichtet. Jeder Kompressionsstufe mit einem Ansaugdruckwert ist zumindest eine Druckentspannungsstufe mit entsprechendem Desorptionsdruckwert zugeordnet, und die Zahl der Druckentspannungsstufen entspricht mindestens der Zahl der Kompressionsstufen. Ferner wird der verdichtete Kohlendioxidgesamtstrom in einer Absorptionsmittelentfernungsvorrichtung zur Entfernung von Absorptionsmittelresten aus dem verdichteten Kohlendioxidgesamtstrom behandelt, wodurch ein Kohlendioxidproduktstrom erhalten wird. Durch die spezifische Verschaltung der Druckentspannungsstufen und Kompressionsstufen und der den Kompressionsstufen nachgeschalteten Absorptionsmittelentfernungsvorrichtung werden Vorteile in Bezug auf den Energieverbrauch und Wasserverbrauch des Verfahrens erzielt.

## Beschreibung

### Gebiet der Erfindung

Die Erfindung betrifft ein Verfahren zur Abtrennung von Kohlendioxid (CO₂) aus einem Rohwasserstoffproduktstrom, wodurch ein Wasserstoffproduktstrom und ein Kohlendioxidproduktstrom erhalten werden.

### Stand der Technik

EP 4 000 713 und EP 4 000 714 offenbaren ein Verfahren zum Entfernen von Kohlendioxid aus Synthesegas mit Hilfe eines hygroskopischen, physikalisch wirkenden Absorptionsmittel. Das Verfahren zeichnet sich dadurch aus, dass Kohlendioxid in einem physikalischen Absorptionsschritt bei erhöhtem Druck entfernt wird, und mit Kohlendioxid beladenes Absorptionsmittel in einer Mehrzahl hintereinander geschalteter Flash-Stufen behandelt wird. In einer der ersten flash-Stufe nachgeschalteten flash-Stufe, oder einer Mehrzahl der ersten flash-Stufe nachgeschalteten flash-Stufen, wird Kohlendioxid aus dem beladenen Absorptionsmittel durch Druckabsenkung entfernt. Das aus dem beladenen Absorptionsmittel desorbierte Kohlendioxid kann anschließend entweder sequestriert (*carbon capture and storage,* CCS) oder einer weiteren Verwendung zugeführt werden (*carbon capture and utilisation,* CCU).

### Beschreibung der Erfindung

Der dadurch erhältliche Kohlendioxidstrom muss üblicherweise von Absorptionsmittelrückständen befreit, gegebenenfalls getrocknet, sowie rückverdichtet (komprimiert) werden, um für die vorgenannten Zwecke geeignet zu sein. Der Energieaufwand für die erneute Verdichtung des Kohlendioxids ist erheblich und sollte minimiert werden. Gleichzeitig sollte auch der Aufwand für die Entfernung von Absorptionsmittelrückständen aus dem Kohlendioxid minimiert werden. Dies betrifft beispielsweise die Minimierung des Wasserverbrauchs für das Auswaschen der Absorptionsmittelrückstände aus dem Kohlendioxid und damit die Minimierung des Energieaufwands für die Rückgewinnung (Destillation) des dafür verwendeten Wassers und des ausgewaschenen Absorptionsmittels. Eine andere Möglichkeit besteht darin, die Absorptionsmittelrückstände durch Adsorption an einem Adsorptionsmittel mit anschließender Desorption der Absorptionsmittelrückstände aus dem Adsorptionsmittel zu entfernen. Auch für einen solchen Verfahrensschritt sollte der Energieaufwand minimiert werden.

Eine Aufgabe der vorliegenden Erfindung besteht daher darin ein Verfahren bereitzustellen, welches den Energieaufwand für die Rückverdichtung des desorbierten Kohlendioxids minimiert.

Eine weitere Aufgabe der vorliegenden Erfindung besteht darin ein Verfahren bereitzustellen, welches den Wasserverbrauch und damit den Energieaufwand bezüglich der Rückgewinnung von Wasser und Absorptionsmittel minimiert.

Eine weitere Aufgabe der vorliegenden Erfindung besteht darin ein Verfahren bereitzustellen, welches den Energieaufwand bezüglich eines Adsorptionsschritts zur Entfernung von Absorptionsmittelrückständen minimiert.

Ein Beitrag zur mindestens teilweisen Lösung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Aufgaben der Erfindung werden zumindest teilweise gelöst durch ein Verfahren zur Abtrennung von Kohlendioxid (CO₂) aus einem Rohwasserstoffproduktstrom, wobei der Rohwasserstoffproduktstrom zumindest Wasserstoff (H₂) und Kohlendioxid umfasst, aufweisend die Verfahrensschritte
a) Entfernen von Kohlendioxid aus dem Rohwasserstoffproduktstrom durch Absorption in einem Absorptionsmittel in einer Absorptionsstufe bei Absorptionsdruck, wodurch ein mit Kohlendioxid beladener Absorptionsmittelstrom und ein Wasserstoffproduktstrom erhalten werden, und wobei der Absorptionsdruck einen Absorptionsdruckwert pA aufweist;
b) Abziehen des mit Kohlendioxid beladenen Absorptionsmittelstroms und des Wasserstoffproduktstroms aus der Absorptionsstufe;
c) Entfernen von Kohlendioxid aus dem beladenen Absorptionsmittelstrom durch Desorption des Kohlendioxids aus dem beladenen Absorptionsmittel in einer Mehrzahl in Serie geschalteter Druckentspannungsstufen bei Desorptionsdruck, wodurch aus jeder der Druckentspannungsstufen ein Kohlendioxidteilstrom abgezogen wird, und wobei jede der Druckentspannungsstufen einen Desorptionsdruck mit einem Desorptionsdruckwert pD aufweist, welcher niedriger ist als der Absorptionsdruckwert pA, und wobei der Desorptionsdruckwert pD von Druckentspannungsstufe zu Druckentspannungsstufe in Flussrichtung des Absorptionsmittels abnimmt;
d) Verdichten der aus den Druckentspannungsstufen abgezogenen Kohlendioxidteilströme in einer Mehrzahl in Serie geschalteter Kompressionsstufen, wobei die Kohlendioxidteilströme zu einem Kohlendioxidgesamtstrom zusammengeführt werden, wodurch ein Kohlendioxidgesamtstrom erhalten wird,
   und wobei jede der Kompressionsstufen einen Ansaugdruck mit einem Ansaugdruckwert pS aufweist, und der Ansaugdruckwert pS von Kompressionsstufe zu Kompressionsstufe in Flussrichtung des Kohlendioxidstroms zunimmt;
dadurch gekennzeichnet, dass
jeder Kompressionsstufe wenigstens eine Druckentspannungsstufe zur Desorption von Kohlendioxid zugeordnet ist, wodurch die Anzahl der Druckentspannungsstufen für die Desorption von Kohlendioxid mindestens der Anzahl der zugeordneten Kompressionsstufen entspricht, wobei der Gasauslass einer Druckentspannungsstufe mit der Saugseite einer ihr zugeordneten Kompressionsstufe fluidisch verbunden ist, und wobei der Ansaugdruckwert pS einer Kompressionsstufe dem Desorptionsdruckwert pD einer ihr zugeordneten Druckentspannungsstufe entspricht, und wobei
der Kohlendioxidgesamtstrom in einer den Kompressionsstufen nachgeschalteten Absorptionsmittelentfernungsvorrichtung behandelt wird, welche zur Entfernung von Absorptionsmittelresten aus dem Kohlendioxidgesamtstrom konfiguriert ist, wodurch ein Kohlendioxidproduktstrom erhalten wird.

Eine Möglichkeit der Behandlung des desorbierten Kohlendioxids besteht darin, die aus den Druckentspannungsstufen ausgeleiteten Kohlendioxidteilströme zunächst zusammenzuführen und anschließend in einem Gaswäscher von Absorptionsmittelresten zu befreien. Anschließend wird das von Absorptionsmittelresten befreite Kohlendioxid vorverdichtet und nachfolgend einer Trocknungsstufe zugeführt. Das getrocknete und vorverdichtete Kohlendioxid wird anschließend in einer oder mehreren weiteren Kompressionsstufen auf den gewünschten Zieldruck verdichtet.

Im Rahmen der Erfindung wurde gefunden, dass diese Vorgehensweise nicht zu den gewünschten Ergebnissen führt und daher verbesserungswürdig ist.

Erfindungsgemäß wird jeder Kompressionsstufe zur Verdichtung von Kohlendioxid zumindest eine Druckentspannungsstufe zugeordnet, wobei die Saugseite einer Kompressionsstufe fluidisch mit dem Gasauslass der zugeordneten Druckentspannungsstufe verbunden ist, und der Ansaugdruck der jeweiligen Kompressionsstufe dem Desorptionsdruck der jeweiligen Druckentspannungsstufe entspricht. "Entsprechen" bedeutet in diesem Zusammenhang, dass der jeweilige Ansaugdruckwert pS und der Desorptionsdruckwert pD der zugeordneten Druckentspannungsstufe gleich sind oder im Wesentlichen gleich sind. Ein Fachmann ist sich in diesem Zusammenhang darüber im Klaren, dass der Ansaugdruckwert pS und der Desorptionsdruckwert pD in der Praxis regelmäßig nicht völlig gleich sein werden, da beispielsweise Druckverluste zwischen dem Gasauslass einer Druckentspannungsstufe und der Saugseite einer Kompressionsstufe auftreten können.

Jeder Kompressionsstufe ist wenigstens eine Druckentspannungsstufe zugeordnet, und die Anzahl der Druckentspannungsstufen für die Desorption von Kohlendioxid entspricht mindestens der Anzahl der zugeordneten Kompressionsstufen. Dabei ist der Gasauslass einer Druckentspannungsstufe mit der Saugseite einer zugeordneten Kompressionsstufe fluidisch verbunden. "Zugeordnete" Druckentspannungsstufen im Sinne der Erfindung sind Druckentspannungsstufen, deren Gasauslass mit der Saugseite einer zugeordneten Kompressionsstufe fluidisch verbunden ist. Entsprechend sind "zugeordnete" Kompressionsstufen im Sinne der Erfindung diejenigen Kompressionsstufen, deren Saugseite mit dem Gasauslass einer oder mehrerer zugeordneter Druckentspannungsstufen verbunden ist.

Der durch die Kompressionsstufen verdichtete Kohlendioxidgesamtstrom wird in einer Absorptionsmittelentfernungsvorrichtung zur Entfernung von Absorptionsmittelrückständen (Absorptionsmittelresten) behandelt. Erfindungsgemäß erfolgt die Entfernung der Absorptionsmittelrückstände somit erst, nachdem die aus den Druckentspannungsstufen abgezogenen Kohlendioxidteilströme zu einem Kohlendioxidgesamtstrom zusammengeführt wurden, und in einer Mehrzahl in Serie geschalteter Kompressionsstufen verdichtet wurden.

Dabei entspricht die Zahl der für die Desorption von Kohlendioxid vorhandenen Druckentspannungsstufen zumindest der Zahl an Kompressionsstufen. Sind beispielsweise drei Kompressionsstufen vorgesehen, so sind mindestens drei Druckentspannungsstufen für die Desorption von Kohlendioxid vorgesehen. Gemäß einer Ausführungsform können mehrere Druckentspannungsstufen einer Kompressionsstufe zugeordnet sein. In diesem Fall sind die Gasauslässe der betreffenden Druckentspannungsstufen jeweils fluidisch mit der Saugseite der zugeordneten Kompressionsstufe verbunden.

Es wurde gefunden, dass gemäß der Erfindung zumindest Einsparungen bezüglich des Energieaufwands des Gesamtverfahrens, bezüglich des Energieaufwands der Kohlendioxidverdichtung, bezüglich des Kühlwasserverbrauchs, und in Bezug auf den thermischen Aufwand (zum Beispiel für die thermische Trennung von Absorptionsmittel und Wasser) erzielt werden. Diese Einsparungen werden im Gegensatz zu einem Verfahren erzielt, in dem die Kohlendioxidteilströme aus den Druckentspannungsstufen zusammengeführt und zunächst von Absorptionsmittelresten befreit werden, bevor die Rückverdichtung des Kohlendioxids erfolgt.

Das Verfahren ist zur Abtrennung von Kohlendioxid (CO₂) aus einem Rohwasserstoffproduktstrom konfiguriert. Der Rohwasserstoffproduktstrom umfasst zumindest Wasserstoff (H₂) und Kohlendioxid. Gemäß einer Ausführungsform umfasst der Rohwasserstoffproduktstrom zumindest Wasserstoff, Kohlemonoxid (CO) und Kohlendioxid.

Gemäß einer Ausführungsform handelt es sich bei dem Rohwasserstoffproduktstrom um geshiftetes Synthesegas, also im Rahmen einer Wassergas-Shift-Reaktion umgesetztes Synthesegas. Ein solches Synthesegas umfasst Wasserstoff und Kohlendioxid als Hauptkomponenten, sowie im Zuge der Wassergas-Shift-Reaktion nicht umgesetztes Kohlenmonoxid in geringem Anteil. Synthesegas kann durch dem Fachmann bekannte Verfahren beispielsweise aus fossilen Einsatzstoffen erzeugt werden. Vorzugsweise wird das Synthesegas durch Dampfreformierung (SMR), autotherme Reformierung (ATR), partielle Oxidation (POx), oder gasbeheizte Reformierung (GHR) von Erdgas gewonnen.

Gemäß einer weiteren Ausführungsform handelt es sich bei dem Rohwasserstoffproduktstrom um nicht geshiftetes Synthesegas, welches als Hauptkomponenten Wasserstoff, Kohlenmonoxid, sowie Kohlendioxid aufweist.

Gemäß Schritt a) des Verfahrens wird Kohlendioxid durch Absorption in einem Absorptionsmittel in einer Absorptionsstufe bei Absorptionsdruck aus dem Rohwasserstoffproduktstrom entfernt. Vorzugsweise handelt es sich bei dem Absorptionsmittel um ein physikalisch wirkendes Absorptionsmittel. Der Absorptionsdruck weist einen Absorptionsdruckwert pA auf, welcher deutlich über Umgebungsdruck liegt. Gemäß einer Ausführungsform weist der Absorptionsdruck einen Absorptionsdruckwert pA von 30 bis 80 bar auf, vorzugsweise von 40 bis 60 bar. Gemäß einer Ausführungsform weist das Verfahren eine Mehrzahl von Absorptionsstufen auf, beispielsweise wenn neben Kohlendioxid auch andere Gasbestandteile, beispielsweise Schwefelverbindungen, aus dem Rohwasserstoffproduktstrom entfernt werden müssen. Die Absorptionsstufe oder die Mehrzahl von Absorptionsstufen können beispielsweise in eine Absorptionskolonne integriert sein. Gemäß einer Ausführungsform wird das Absorptionsmittel gekühlt, um die Absorption der jeweiligen Gaskomponente im Absorptionsmittel, insbesondere von Kohlendioxid, zu verbessern.

Gemäß Schritt b) wird der mit Kohlendioxid beladene Absorptionsmittelstrom aus der Absorptionsstufe abgezogen. Weiterhin wird der Wasserstoffproduktstrom aus der Absorptionsstufe abgezogen. Der Wasserstoffproduktstrom entspricht dem durch die Absorption in Schritt a) an Kohlendioxid verarmtem Rohwasserstoffproduktstrom. Handelt es sich bei dem Rohwasserstoffproduktstrom um geshiftetes Synthesegas, weist der Wasserstoffproduktstrom Wasserstoff als Hauptkomponente auf. Zur Gewinnung von Reinwasserstoff kann ein solcher Wasserstoffproduktstrom in einem nachfolgenden Schritt einer weiteren Reinigung unterzogen werden, beispielsweise mittels einer Membrantrennung oder einer Vorrichtung für Druckwechseladsorption. Handelt es sich bei dem Rohwasserstoffproduktstrom um nicht geshiftetes Synthesegas, weist der Wasserstoffproduktstrom Wasserstoff und Kohlenmonoxid als Hauptkomponenten auf. Unabhängig davon, ob es sich bei dem Rohwasserstoffproduktstrom um nicht geshiftetes oder geshiftets Synthesegas handelt, können im Wasserstoffproduktstrom gemäß einem Beispiel noch bis zu 5 % Kohlendioxid vorhanden sein.

Gemäß Schritt c) wird das Kohlendioxid aus dem beladenen Absorptionsmittel durch Druckentspannung gegenüber dem Absorptionsdruck entfernt, also desorbiert. Dies erfolgt in einer Mehrzahl in Serie geschalteter Druckentspannungsstufen bei einem entsprechenden Desorptionsdruck, welcher in jedem Fall niedriger ist als der Absorptionsdruck. Jede Druckentspannungsstufe zur Desorption von Kohlendioxid weist bezüglich des Desorptionsdrucks einen entsprechenden Desorptionsdruckwert pD auf, welcher in jedem Fall niedriger ist als der Absorptionsdruckwert pA. Der Desorptionsdruckwert pD nimmt von Druckentspannungsstufe zu Druckentspannungsstufe in Flussrichtung des Absorptionsmittels ab, insbesondere in Flussrichtung des beladenen Absorptionsmittels ab, insbesondere in Flussrichtung des beladenen Absorptionsmittels mit abnehmender Kohlendioxidkonzentration ab. Aufgrund der Mehrzahl von Druckentspannungsstufen zur Desorption von Kohlendioxid gemäß Schritt c) wird aus jeder der Druckentspannungsstufen ein Kohlendioxidteilstrom abgezogen.

Gemäß einer Ausführungsform wird das Absorptionsmittel in den Druckentspannungsstufen zur Desorption von Kohlendioxid nicht erhitzt. In diesem Fall handelt es sich bei den Druckentspannungsstufen um sogenannte flash-Stufen. Gemäß einer Ausführungsform wird das Absorptionsmittel in zumindest einer Druckentspannungsstufe erhitzt, insbesondere zum Sieden erhitzt. Gemäß dieser Ausführungsform handelt es sich bei zumindest einer Druckentspannungsstufe um eine Heißregenerationsstufe. Die Dämpfe des Absorptionsmittels wirken in einer Heißregenerationsstufe als Strippmittel in der jeweiligen Druckentspannungsstufe. Gemäß einer bevorzugten Ausführungsform wird das Absorptionsmittel in der letzten der in Serie geschalteten Druckentspannungsstufen zum Sieden erhitzt, um das Absorptionsmittel in der letzten Regenerationsstufe vollständig zu regenerieren.

Gemäß Schritt c) wird in einer Druckentspannungsstufe je nach Anordnung entweder ein teilregeneriertes oder ein vollständig regeneriertes Absorptionsmittel erhalten, welches aus der jeweiligen Druckentspannungsstufe abgezogen wird. Teilregeneriertes Absorptionsmittel wird vorzugsweise der folgenden der in Serie geschalteten Druckentspannungsstufen zur weiteren Desorption von Kohlendioxid zugeführt. Vollständig regeneriertes Absorptionsmittel wird vorzugsweise zur Absorptionsstufe gemäß Schritt a), zur erneuten Absorption von Kohlendioxid in dieser Absorptionsstufe, zurückgeführt.

Handelt es sich bei der letzten der in Serie geschalteten Druckentspannungsstufen um eine Heißregenerationsstufe, kann der aus dieser Heißregenrationsstufe abgezogene Kohlendioxidteilstrom einer vorgeschalteten Druckentspannungsstufe, insbesondere einer flash-Stufe, zugeführt werden. Der aus der Heißregenerationsstufe abgezogene Kohlendioxidteilstrom wird dann mit dem Kohlendioxidteilstrom aus dieser flash-Stufe abgezogen und nachfolgend der Kompressionsstufe zugeführt, welcher diese flash-Stufe zugeordnet ist. Vorzugsweise wird der aus der Heißregenerationsstufe abgezogene Kohlendioxidteilstrom derjenigen Druckentspannungsstufe zugeführt, welche einen ähnlichen Druck wie die Heißregenerationsstufe aufweist, so dass kein dedizierter Kompressor für die Verdichtung des aus der Heißregenerationsstufe abgezogenen Kohlendioxidteilstroms benötigt wird.

Gemäß einer alternativen Ausführungsform wird der aus der Heißregenerationsstufe desorbierte Kohlendioxidteilstrom nach Kühlung in einem Wärmeaustauscher einer nachgeschalteten Kompressionsstufe zugeführt, welcher die Heißregenerationsstufe zugeordnet ist.

Vorzugsweise gilt für die Heißregenerationsstufe ein Desorptionsdruckwert pD von 1,3 bis 3 bar.

Gemäß Schritt d) werden die aus den Druckentspannungsstufen abgezogenen Kohlendioxidteilströme in einer Mehrzahl in Serie geschalteter Kompressionsstufen verdichtet. Dabei werden die Kohlendioxidteilströme zu einem Kohlendioxidgesamtstrom zusammengeführt, welcher insbesondere der letzten der in Serie geschalteten Kompressionsstufen zugeführt wird, wodurch auf der Druckseite dieser letzten Kompressionsstufe ein Kohlendioxidgesamtstrom resultiert. Dabei handelt es sich um einen verdichteten Kohlendioxidgesamtstrom, welcher optional in einer oder mehreren Nachverdichtungsstufen weiter verdichtet werden kann, insbesondere bevor der Kohlendioxidgesamtstrom anschließend der Absorptionsmittelentfernungsvorrichtung zugeführt wird.

Beispielsweise wird der ersten der in Serie geschalteten Kompressionsstufen der Kohlendioxidteilstrom aus derjenigen Druckentspannungsstufe zugeführt, welche den niedrigsten Desorptionsdruckwert pD aufweist. Der zweiten der in Serie geschalteten Kompressionsstufen wird der Kohlendioxidteilstrom zugeführt, welcher auf der Druckseite aus der ersten Kompressionsstufe austritt. Gleichzeitig wird der zweiten Kompressionsstufe der Kohlendioxidteilstrom aus derjenigen Druckentspannungsstufe zugeführt, welche den zweitniedrigsten Desorptionsdruckwert pD aufweist, und so weiter.

Jede der Kompressionsstufen kann einen oder mehrere Kompressoren beinhalten, wobei dem Fachmann bekannte Kompressor-Typen, wie Kolbenkompressoren, Zentrifugalkompressoren, Turbokompressoren, oder Flüssigkeitsringkompressoren, zum Einsatz kommen. Die Auswahl des Kompressor-Typs hängt beispielsweise vom jeweiligen Absolutdruck des Kohlendioxidteilstroms oder Kohlendioxidgesamtstroms auf der Saugseite der jeweiligen Kompressionsstufe ab.

Gemäß einer Ausführungsform ist einer Kompressionsstufe eine Kühlstufe zur Kühlung des aus der jeweiligen Kompressionsstufe austretenden Kohlendioxidteilstroms oder Kohlendioxidgesamtstroms nachgeschaltet.

Jede der Kompressionsstufen weist einen Ansaugdruck, auf der Saugseite, mit einem Ansaugdruckwert pS auf. Der Ansaugdruckwert pS nimmt von Kompressionsstufe zu Kompressionsstufe in Flussrichtung des Kohlendioxidstroms zu. Jeder Kompressionsstufe ist zumindest eine Druckentspannungsstufe zugeordnet, wobei der Ansaugdruckwert pS einer Kompressionsstufe dem Desorptionsdruckwert pD einer zugeordneten Druckentspannungsstufe entspricht. Dabei sind der Gasauslass einer Druckentspannungsstufe und die Saugseite einer zugeordneten Kompressionsstufe mit entsprechenden Werten für pS und pD fluidisch miteinander verbunden.

Eine Ausführungsform des Verfahrens ist dadurch gekennzeichnet, dass der Ansaugdruckwert pS einer Kompressionsstufe und der Desorptionsdruckwert pD einer zugeordneten Druckentspannungsstufe den gleichen Wert mit einer maximalen Abweichung von 25 % aufweisen, insbesondere der Wert des Desorptionsdruckwerts pD um maximal 25 % höher ist als der Wert des zugeordneten Ansaugdruckwerts pS.

Vorzugsweise und im Sinne dieser Ausführungsform ist der Ausdruck dass "der Ansaugdruckwert pS einer Kompressionsstufe dem Desorptionsdruckwert pD einer zugeordneten Druckentspannungsstufe entspricht" so zu verstehen, dass der Ansaugdruckwert pS einer Kompressionsstufe und der Desorptionsdruckwert pD einer zugeordneten Druckentspannungsstufe den gleichen Wert mit einer maximalen Abweichung von 25 % aufweisen. Insbesondere unterscheiden sich der Ansaugdruckwert pS der Kompressionsstufe und der Desorptionsdruckwert pD der zugeordneten Druckentspannungsstufe um maximal 25 % voneinander, wobei der Ansaugdruckwert pS vorzugsweise als Referenzwert dient. Mit anderen Worten, der Desorptionsdruckwert pD ist maximal 25 % größer oder kleiner als der Ansaugdruckwert. Insbesondere ist der Wert des Desorptionsdruckwerts pD um maximal 25 % höher (größer) als der Wert des zugeordneten Ansaugdruckwerts pS. Letzteres liegt darin begründet, dass insbesondere Druckverluste auf der Kohlendioxidseite in Strömungsrichtung von einer Druckentspannungsstufe zu einer Kompressionsstufe auftreten. Entsprechend wird der Desorptionsdruckwert pD einer Druckentspannungsstufe vorzugsweise so festgelegt, dass er höher ist, insbesondere maximal 25 % höher ist, als der Ansaugdruckwert pS der Kompressionsstufe, welcher die jeweilige Druckentspannungsstufe zugeordnet ist.

Eine Ausführungsform des Verfahrens ist dadurch gekennzeichnet, dass die Anzahl der Druckentspannungsstufen für die Desorption von Kohlendioxid der Anzahl der zugeordneten Kompressionsstufen entspricht.

In diesem Fall ist jeder Kompressionsstufe eine einzige Druckentspannungsstufe zugeordnet.

Insbesondere entspricht die Anzahl der Druckentspannungsstufen derjenigen Anzahl von Kompressionsstufen, welche der Absorptionsmittelentfernungsvorrichtung vorgeschaltet sind. Der Absorptionsmittelentfernungsvorrichtung kann eine weitere Kompressionsstufe oder können mehrere weitere Kompressionsstufen nachgeschaltet sein, um den Kohlendioxidproduktstrom weiter zu verdichten. Die der Absorptionsmittelentfernungsvorrichtung nachgeschalteten Kompressionsstufen können als Nachverdichtungsstufen bezeichnet werden. Diesen sind keine Druckentspannungsstufe zugeordnet, das heißt es besteht keine direkte Fluidverbindung zwischen dem Gasauslass einer Druckentspannungsstufen und der Saugseite einer solchen Nachverdichtungsstufe.

Eine Ausführungsform des Verfahrens ist dadurch gekennzeichnet, dass der Desorptionsdruckwert pD einer Druckentspannungsstufe auf Basis des Ansaugdruckwerts pS derjenigen Kompressionsstufe festgelegt wird, welcher die Druckentspannungsstufe zugeordnet ist.

Der Desorptionsdruckwert pD einer Druckentspannungsstufe kann einfach durch Regelung über ein Druckentspannungsventil, über welches der jeweilige Strom an beladenem Absorptionsmittel in die Druckentspannungsstufe eintritt, eingestellt werden. Der Desorptionsdruckwert ergibt sich dabei insbesondere aus den an den jeweiligen Kompressionsstufen eingestellten Verdichtungsverhältnissen. Diese wiederum ergeben sich aus der maximal zulässigen Temperatur des jeweiligen Kohlendioxidteilstroms oder Kohlendioxidgesamtstroms auf der Druckseite der jeweiligen Kom pressionsstufe.

Eine Ausführungsform des Verfahrens ist dadurch gekennzeichnet, dass in den Druckentspannungsstufen kein Erhitzen des beladenen Absorptionsmittels erfolgt, insbesondere kein Erhitzen bis zum Siedepunkt des Absorptionsmittels erfolgt.

Sofern möglich, und für den Fall dass die jeweilige Spezifikation für den Kohlendioxidproduktstrom eingehalten werden kann, wird das Verfahren gemäß dieser Ausführungsform ohne Verwendung einer Heißregenerationsstufe als Druckentspannungsstufe betrieben.

Eine Ausführungsform des Verfahrens ist dadurch gekennzeichnet, dass jede der Kompressionsstufen ein Verdichtungsverhältnis von 2,0 bis 4,0 aufweist, vorzugsweise ein Verdichtungsverhältnis von 2,5 bis 3,5 aufweist, weiter bevorzugt von 2,6 bis 3,3 aufweist.

Wie zuvor erwähnt, wird das Verdichtungsverhältnis einer Kompressionsstufe durch die maximal zulässige (Design-)Temperatur des für die jeweilige Kompressionsstufe ausgewählten Kompressors bestimmt. Ausschlaggebend ist dabei die Austrittstemperatur des Kohlendioxidteilstroms oder, im Falle der letzten der in Serie geschalteten Kompressionsstufen, des Kohlendioxidgesamtstroms, auf der Druckseite des jeweiligen Kompressors.

Eine Ausführungsform des Verfahrens ist dadurch gekennzeichnet, dass die Absorptionsmittelentfernungsvorrichtung einen Gaswäscher umfasst, wobei in dem Gaswäscher Absorptionsmittelreste mit Hilfe von Wasser aus dem Kohlendioxidgesamtstrom entfernt werden, und die Absorptionsmittelentfernungsvorrichtung eine dem Gaswäscher nachgeschaltete Trocknungsvorrichtung umfasst.

Die Verwendung eines Gaswäschers in Kombination mit Wasser als Waschmittel zur Entfernung von Absorptionsmittelresten eignet sich insbesondere bei der Verwendung von hygroskopischen Absorptionsmitteln, wie Methanol. Bei dem Gaswäscher kann es sich beispielsweise um eine Waschkolonne handeln, die von unten nach oben mit dem verdichteten Kohlendioxidgesamtstrom durchströmt wird, und in welcher Wasser im Gegenstrom von oben nach unten geführt wird. Der am Kolonnenkopf austretende, von Absorptionsmittelresten befreite Kohlendioxidgesamtstrom, wird anschließend in einer nachgeschalteten Trocknungsvorrichtung von Wasserrückständen befreit. Gemäß einem Beispiel weist die Trocknungsvorrichtung ein Adsorbens zur selektiven Entfernung von Wasser, beispielsweise ein Molekularsieb, auf.

Bei Verwendung von Methanol als Absorptionsmittel ist eine Ausführungsform des Verfahrens dadurch gekennzeichnet, dass in dem Gaswäscher ein Methanol-Wasser-Gemisch erhalten wird, welches aus dem Gaswäscher abgezogen wird und anschließend
- zur Absorptionsstufe zurückgeführt wird, oder
- einer thermischen Trennvorrichtung zugeführt wird, zur thermischen Trennung des Gemischs in Methanol und Wasser, und aus der thermischen Trennvorrichtung abgezogenes Methanol zur Absorptionsstufe zurückgeführt wird.

Eine Ausführungsform des Verfahrens ist dadurch gekennzeichnet, dass die Absorptionsmittelentfernungsvorrichtung ein Adsorptionsmittelbett umfasst, wobei die Entfernung der Absorptionsmittelreste aus dem Kohlendioxidgesamtstrom durch Adsorption an dem Adsorptionsmittel des Adsorptionsmittelbetts erfolgt.

Das Desorbieren der Absorptionsmittelreste aus dem Adsorptionsmittel kann durch dem Fachmann bekannte Verfahren erfolgen.

Diese Alternative kann sich dann anbieten, wenn sich Absorptionsmittelrückstände nur schwierig mit Wasser in einem Gaswäscher entfernen lassen, beispielsweise aufgrund hydrophober Eigenschaften des Absorptionsmittels oder aufgrund schlechter Löslichkeit des Absorptionsmittels in Wasser oder Mischbarkeit mit Wasser.

Eine Ausführungsform des Verfahrens ist dadurch gekennzeichnet, dass das Verfahren drei Druckentspannungsstufen zur Desorption von Kohlendioxid aus dem beladenen Absorptionsmittelstrom umfasst.

Vorzugsweise handelt es sich bei den drei Druckentspannungsstufen in Flussrichtung des beladenen Absorptionsmittels um eine Niederdruck flash-Stufe (low pressure (LP) flash), eine Niederniederdruck flash-Stufe (low low pressure (LLP) flash), und eine Vakuum flash-Stufe (vacuum flash (VF)). Vorzugsweise weist die Niederdruck flash-Stufe einen Druckbereich von 6 bis 2,5 bar auf. Vorzugsweise weist die Niederniederdruck flash-Stufe einen Druckbereich von 2,5 bis 1,1 bar auf. Vorzugsweise weist die Vakuum flash-Stufe einen Druck von kleiner als 1,1 bar auf, wobei ein Absolutdruck von bis zu 0,1 bar erreichbar ist.

Entsprechend ist eine Ausführungsform des Verfahrens dadurch gekennzeichnet, dass die Desorptionsdruckwerte pD der für die Desorption von Kohlendioxid genutzten Druckentspannungsstufen in einem Bereich von 0,1 bis 6 bar liegen, vorzugsweise in einem Bereich von 0,4 bis 3,0 bar liegen.

Eine Ausführungsform des Verfahrens ist dadurch gekennzeichnet, dass der Mehrzahl von Druckentspannungsstufen zur Desorption von Kohlendioxid eine weitere Druckentspannungsstufe zur Desorption von zumindest Wasserstoff aus dem beladenen Absorptionsmittel vorgeschaltet ist, wodurch ein Wasserstoffrückführstrom erhalten wird, der aus der Druckentspannungsstufe zur Desorption von Wasserstoff abgezogen wird, und wobei der Wasserstoffrückführstrom dem Rohwasserstoffproduktstrom zugeführt wird. Alternativ kann der Wasserstoffrückführstrom als Brennstoff in einem vorgeschalteten Verfahren zur Erzeugung des Rohwasserstoffproduktstroms zugeführt werden. Beispiele dafür sind die Zuführung des Brennstoffs zu den Brennern in der Strahlungszone eines Dampfreformers, oder zum Brenner eines autothermen Reformers. Gemäß einer Ausführungsform enthält der Wasserstoffrückführstrom neben Wasserstoff auch Kohlenmonoxid.

Grundsätzlich sind im Rahmen der Erfindung Druckentspannungsstufen zur Desorption von Kohlendioxid, sowie Druckentspannungsstufen zur Desorption von Wertgasen, insbesondere Wasserstoff, zu unterscheiden. Wasserstoff weist gegenüber den insbesondere verwendeten physikalisch wirkenden Absorptionsmitteln, insbesondere Methanol, einen niedrigeren Absorptionskoeffizienten im Vergleich zu Kohlendioxid auf. Trotzdem wird stets eine nicht zu vernachlässigende Menge an Wasserstoff im Absorptionsschritt gemäß Schritt a) co-absorbiert. Dieser co-absorbierte Wasserstoff kann bei relativ hohen Drücken aus dem Absorptionsmittel desorbiert werden, in einem Druckbereich, in dem Kohlendioxid im Absorptionsmittel absorbiert bleibt. Ähnliches gilt für Kohlenmonoxid, bei Verwendung von nicht geshiftetem Synthesegas als Rohwasserstoffproduktstrom. Entsprechend ist die Druckentspannungsstufe zur Desorption von zumindest Wasserstoff den Druckentspannungsstufen zur Desorption von Kohlendioxid vorgeschaltet. Vorzugsweise wird die Druckentspannungsstufe zur Desorption von zumindest Wasserstoff in einem Druckbereich von 9 bis 25 bar betrieben.

Eine Ausführungsform des Verfahrens ist dadurch gekennzeichnet, dass der Absorptionsmittelentfernungsvorrichtung eine weitere Kompressionsstufe zur Kompression des Kohlendioxidproduktstroms nachgeschaltet ist.

Je nach Anforderung, insbesondere für CCS Anwendungen, kann es erforderlich sein, den Kohlendioxidproduktstrom weiter zu verdichten. Für gasförmiges Kohlendioxid kann ein Absolutdruck von 20 bar ausreichend sein, für verflüssigtes, superkritisches Kohlendioxid sind noch höhere Drücke erforderlich.

Bei dem Absorptionsmittel handelt es sich insbesondere um eine physikalisch wirkendes Absorptionsmittel.

Eine Ausführungsform des Verfahrens ist dadurch gekennzeichnet, dass das Absorptionsmittel Methanol aufweist, insbesondere aus Methanol besteht. Vorzugsweise wird für die Absorption des Kohlendioxids gemäß Schritt a) tiefkaltes Methanol verwendet, welches in einem Temperaturbereich zwischen -30 °C (minus 30 Grad Celsius) und -70 °C (minus 70 Grad Celsius) verwendet wird.

Gemäß einer weiteren Ausführungsform handelt es sich bei dem Absorptionsmittel um ein Gemisch aus Dimethylethern von Polyethylenglykolen.

Gemäß einer weiteren Ausführungsform handelt es sich bei dem Absorptionsmittel um ein chemisch wirkendes Absorptionsmittel.

Vorzugsweise enthält das chemisch wirkende Absorptionsmittel ein Amin, ein Gemisch von Aminen oder besteht aus einem Amin oder einem Gemisch von Aminen. Ein solches Absorptionsverfahren wird auch als Aminwäsche bezeichnet und ist dem Fachmann bekannt. Das Absorptionsmittel kann ein Amin, wie Monoethanolamin (MEA), Diethanolamin (DEA), Methyldiethanolamin (MDEA), Diglycolamin (DGA), Aminomethylpropanol (AMP), einen Promotor, wie Piperazin (PZ), oder ein Gemisch aus mindestens einem der vorgenannten enthalten.

Eine Ausführungsform des Verfahrens ist dadurch gekennzeichnet, dass stromabwärts zu der Mehrzahl in Serie geschalteten Kompressionsstufen und stromaufwärts zu der Absorptionsmittelentfernungsvorrichtung eine Nachverdichtungsstufe angeordnet ist, wobei die Nachverdichtungsstufe fluidisch mit der letzten der in Serie geschalteten Kompressionsstufen und mit der Absorptionsmittelentfernungsvorrichtung verbunden ist.

Die Nachverdichtungsstufe unterscheidet sich von den Kompressionsstufen dahingehend, dass diese nicht über ihre Saugseite mit dem Gasauslass einer Druckentspannungsstufe fluidisch verbunden ist. Vielmehr ist die Nachverdichtungsstufe insbesondere direkt fluidisch mit der letzten der in Serie geschalteten Kompressionsstufen verbunden. Gemäß einer Ausführungsform sind mehrere Nachverdichtungsstufen stromabwärts zu der Mehrzahl in Serie geschalteten Kompressionsstufen und stromaufwärts zu der Absorptionsmittelentfernungsvorrichtung angeordnet. Diese sind vorzugsweise in Serie angeordnet.

Eine Ausführungsform des Verfahrens ist dadurch gekennzeichnet, dass zwischen zwei der Mehrzahl in Serie geschalteten Kompressionsstufen eine Zwischenverdichtungsstufe angeordnet ist, wobei die Zwischenverdichtungsstufe fluidisch mit der ihr vorgeschalteten und der ihr nachgeschalteten Kompressionsstufe verbunden ist.

Die Zwischenverdichtungsstufe unterscheidet sich von den Kompressionsstufen dahingehend, dass diese nicht über ihre Saugseite mit dem Gasauslass einer Druckentspannungsstufe fluidisch verbunden ist. Vielmehr ist die Zwischenverdichtungsstufe insbesondere direkt fluidisch mit der jeweils vorgeschalteten und der jeweils nachgeschalteten Kompressionsstufe verbunden und/oder mit zumindest einer weiteren Zwischenverdichtungsstufe verbunden.

### Ausführungsbeispiele

In den folgenden Beispielen wird die Erfindung unter Hinzuziehung der Zeichnungen näher erläutert. Das erfindungsgemäße Ausführungsbeispiel stellt eine beispielhafte Ausgestaltung der Erfindung dar, ohne diese in ihrem Umfang zu beschränken.

Es zeigt
- Figur 1: ein vereinfachtes Verfahrensfließbild eines Verfahrens 100 gemäß einem erfindungsgemäßen Beispiel, und
- Figur 2: ein vereinfachtes Verfahrensfließbild eines Verfahrens 200 gemäß einem Vergleichsbeispiel.

In den Figuren sind gleiche Elemente mit gleichen Bezugsziffern versehen. Gasströme sind als gestrichelte Linien dargestellt, während Flüssigkeitsströme als durchgezogene Linien dargestellt sind. Es versteht sich, dass Gasströme auch Flüssigkeit enthalten können und Flüssigkeiten Gase, beispielsweise in gelöster Form, enthalten können. Pfeilspitzen stellen die Flussrichtung des jeweiligen Stroms dar. Absorptionsmittel ist Methanol.

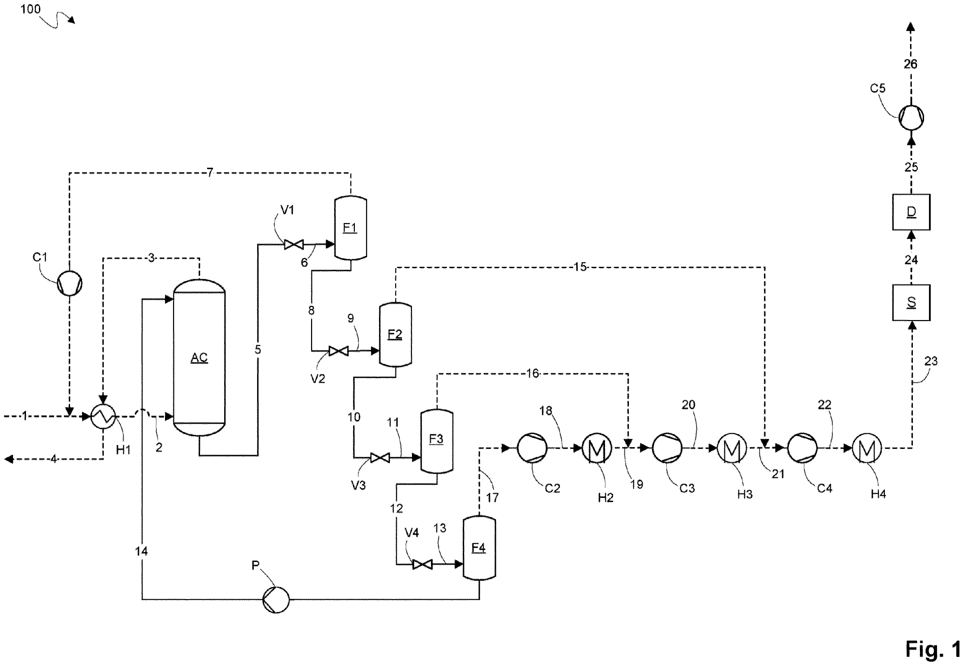

Figur 1 zeigt ein vereinfachtes Verfahrensfließbild 100 eines erfindungsgemäßen Verfahrens zur Abtrennung von Kohlendioxid (CO₂) aus einem Rohwasserstoffproduktstrom, zur Gewinnung eines Wasserstoffproduktstroms und eines Kohlendioxidproduktstroms.

Über Leitung 1 wird ein Rohwasserstoffproduktstrom herangeführt, welcher beispielsweise durch Wassergas-Shift eines Synthesegases aus einem Dampfreformer (nicht gezeigt) erzeugt wurde. Der Rohwasserstoffproduktstrom enthält Wasserstoff als Zielprodukt, sowie Kohlendioxid als zu entfernendes Nebenprodukt. Neben den Hauptkomponenten Wasserstoff und Kohlendioxid können ferner in geringfügiger Konzentration Gasbestandteile wie Kohlenmonoxid und Methan, sowie Wasser, im Rohwasserstoffproduktstrom enthalten sein. Bei dem Rohwasserstoffproduktstrom könnte es sich auch um nicht geshiftetes Synthesegas handeln. In diesem Fall wäre das Zielprodukt Synthesegas, also eine Mischung aus vornehmlich Wasserstoff und Kohlenmonoxid.

Der Rohwasserstoffproduktstrom wird zunächst in Wärmeaustauscher H1 auf eine Temperatur von etwa -15 °C vorgekühlt, anschließend über Leitung 2 weitergeführt und schließlich in eine Absorptionskolonne AC eingeschleust, welche als Absorptionsstufe zur Absorption von Kohlendioxid aus dem Rohwasserstoffproduktstrom vorgesehen ist. In der Absorptionskolonne AC herrscht ein Absorptionsdruck von etwa 40 bar vor, was dem Absorptionsdruckwert pA entspricht. Zur Absorption des Kohlendioxids in Methanol wird der Rohwasserstoffproduktstrom im Sumpfbereich in die Absorptionskolonne AC eingeleitet und strömt in dieser von unten nach oben. Währenddessen wird regeneriertes Methanol über Leitung 27 im Kopfbereich der Absorptionskolonne AC in diese eingeleitet und strömt in dieser entsprechend von oben nach unten. Bevor das regenerierte Methanol in die Absorptionskolonne AC eingeleitet wird, wird dieses auf eine tiefkalte Temperatur von bis zu -70 °C heruntergekühlt (Kühlung nicht gezeigt).

In der Absorptionskolonne AC werden ein mit hauptsächlich Kohlendioxid beladener Methanolstrom (Absorptionsmittelstrom) und ein kohlendioxidarmer Wasserstoffproduktstrom erhalten. Der Wasserstoffproduktstrom wird über Leitung 3 aus der Absorptionskolonne AC abgezogen und in Wärmeaustauscher H1 zum Kühlen des Rohwasserstoffproduktstroms verwendet. Der dadurch aufgewärmte Wasserstoffproduktstrom wird über Leitung 4 weitergeführt, aus dem Verfahren ausgleitet und einer weiteren Verarbeitung zugeführt. Beispielsweise kann der Wasserstoffproduktstrom einer Druckwechseladsorptionsvorrichtung (PSA-Einheit) zugeführt werden, um reinen Wasserstoff aus dem Wasserstoffproduktstrom zu erzeugen.

Der aus der Absorptionskolonne AC abgezogene, mit Kohlendioxid beladene Methanolstrom wird über Leitung 5 weitergeführt und mit Hilfe des Druckentspannungsventils V1 auf einen Druck von 12 bar entspannt. Der entspannte Methanolstrom wird über Leitung 6 weitergeführt und in einen Flash-Behälter F1 eingebracht. Der Flash-Behälter F1 stellt eine Druckentspannungsstufe dar, welche zur Desorption von im Absorptionsmittel co-absorbiertem Wertgas konfiguriert ist. Im Falle des Verfahrens 100 handelt es sich bei diesem Wertgas hauptsächlich um Wasserstoff.

Handelte es sich bei dem Rohwasserstoffproduktstrom um nicht geshiftetes Synthesegas, würde an dieser Stelle vornehmlich eine Mischung aus Wasserstoff und Kohlenmonoxid als Flash-Gas im Flash-Behälter F1 erhalten werden.

Der als Flash-Gas in Flash-Behälter F1 erhaltene Wasserstoffstrom wird über Leitung 7 aus dem Flash-Behälter F1 abgezogen und mit Hilfe von Kompressor C1 auf Absorptionsdruck rückverdichtet. Der rückverdichtete Wasserstoffstrom wird anschließend dem Rohwasserstoffproduktstrom in Leitung 1 zugeführt und wird dadurch in den Prozess für eine erneute Behandlung in Absorptionskolonne AC zurückgeführt.

Das hauptsächlich mit Kohlendioxid beladene Methanol, frei von co-absorbiertem Wertgas, wird über Leitung 8 aus Flash-Behälter F1 abgezogen und mit Hilfe des Druckentspannungsventils V2 auf einen Druck von 3,0 bar entspannt. Im Flash-Behälter F2 herrscht somit ein Desorptionsdruck mit einem Desorptionsdruckwert pD von 3,0 bar. Über Leitung 9 wird das entspannte Absorptionsmittel anschließend in den Flash-Behälter F2 eingeleitet. Flash-Behälter F2 stellt die erste von drei Druckentspannungsstufe zur Desorption von Kohlendioxid aus dem beladenen Methanol dar. Bei Flash-Behälter F2 handelt es sich um eine Niederdruck-Flash-Stufe. Aus dem Flash-Behälter F2 wird ein Kohlendioxidteilstrom über Leitung 15 und Leitung 21 auf die Saugseite des Kompressors C4 geführt. Dadurch ist der Gasauslass (nicht gezeigt) des Flash-Behälters F2 fluidisch mit der Saugseite des Kompressors C4 verbunden. Kompressor C4 stellt die dritte von drei zur Verdichtung von Kohlendioxid konfigurierten Kompressionsstufen dar, die stromaufwärts zur Absorptionsmittelentfernungsvorrichtung angeordnet sind. In Kompressor C4 wird der Kohlendioxidgesamtstrom aus den Leitungen 21 und 15 von 2,8 bar auf der Saugseite des Kompressors C4 auf 7,6 bar auf der Druckseite des Kompressors C4 verdichtet. Der Kohlendioxidgesamtstrom wird über Leitung 22 weitergeführt und anschließend im Wärmeaustauscher H4 gekühlt. Am Ausgang des Wärmeaustauschers H4 weist der Kohlendioxidgesamtstrom einen Druck von 7,5 bar auf.

Das mit Kohlendioxid noch teilbeladene Absorptionsmittel wird weiter über Leitung 10 aus dem Flash-Behälter F2 abgezogen, in Druckentspannungsventil V3 auf 1,3 bar entspannt, und über Leitung 11 in den Flash-Behälter F3 eingeleitet. Flash-Behälter F3 stellt die zweite von drei Druckentspannungsstufen zur Desorption von Kohlendioxid aus dem beladenen Methanol dar. Bei Flash-Behälter F3 handelt es sich um eine Niederniederdruck-Flash-Stufe. Aus dem Flash-Behälter F3 wird ein Kohlendioxidteilstrom über Leitung 16 und Leitung 19 auf die Saugseite des Kompressors C3 geführt. Dadurch ist der Gasauslass (nicht gezeigt) des Flash-Behälters F3 fluidisch mit der Saugseite des Kompressors C3 verbunden. Kompressor C3 stellt die zweite von drei zur Verdichtung von Kohlendioxid konfigurierten Kompressionsstufen dar, die stromaufwärts zur Absorptionsmittelentfernungsvorrichtung angeordnet sind. In Kompressor C3 wird ein Kohlendioxidteilstrom aus den Leitungen 16 und 19 von 1,1 bar auf der Saugseite des Kompressors C3 auf 2,9 bar auf der Druckseite des Kompressors C3 verdichtet. Der Kohlendioxidteilstrom wird über Leitung 20 weitergeführt und anschließend im Wärmeaustauscher H3 gekühlt. Am Ausgang des Wärmeaustauschers H3 weist der Kohlendioxidteilstrom einen Druck von 2,8 bar auf.

Das nach wie vor mit Kohlendioxid teilbeladene Absorptionsmittel wird weiter über Leitung 12 aus dem Flash-Behälter F3 abgezogen, in Druckentspannungsventil V4 auf 0,4 bar entspannt, und über Leitung 13 in den Flash-Behälter F4 eingeleitet. Flash-Behälter F4 stellt die dritte von drei Druckentspannungsstufen zur Desorption von Kohlendioxid aus dem beladenen Methanol dar. Bei Flash-Behälter F4 handelt es sich um eine Vakuum-Flash-Stufe. Aus dem Flash-Behälter F4 wird ein Kohlendioxidteilstrom über Leitung 17 auf die Saugseite des Kompressors C2 geführt. Dadurch ist der Gasauslass (nicht gezeigt) des Flash-Behälters F4 fluidisch mit der Saugseite des Kompressors C2 verbunden. Kompressor C2 stellt die erste von drei zur Verdichtung von Kohlendioxid konfigurierten Kompressionsstufen dar, die stromaufwärts zur Absorptionsmittelentfernungsvorrichtung angeordnet sind. In Kompressor C2 wird ein Kohlendioxidteilstrom aus Leitung 17 von 0,4 bar auf der Saugseite des Kompressors C2 auf 1,1 bar auf der Druckseite des Kompressors C2 verdichtet. Der Kohlendioxidteilstrom wird über Leitung 18 weitergeführt und anschließend im Wärmeaustauscher H2 gekühlt. Am Ausgang des Wärmeaustauschers H2 weist der Kohlendioxidteilstrom einen Druck von 1,1 bar auf.

Aus dem Flash-Behälter F4 wird über Leitung 14 ein weitgehend von Kohlendioxid befreiter Methanolstrom abgezogen, der durch Pumpe P auf den Absorptionsdruck von etwa 40 bar rückverdichtet und Absorptionskolonne AC über deren Kopfbereich zugeführt wird.

Optional (nicht gezeigt) kann der aus Flash-Behälter F4 abgezogene Methanolstrom einer weiteren Druckentspannungsstufe zugeführt werden, welche als Heißregenerationsstufe konfiguriert ist. Dadurch kann die Menge an zurückgewonnenem (desorbiertem) Kohlendioxid weiter erhöht werden, beziehungsweise die Effizienz des Absorptionsmittels durch eine verbessere Regeneration verbessert werden.

Erfindungsgemäß ist Kompressor C2, also der ersten Kompressionsstufe, der Flash-Behälter F4, also die dritte für die Desorption von Kohlendioxid konfigurierte Druckentspannungsstufe, zugeordnet. Der Desorptionsdruckwert pD in der dritten Druckentspannungsstufe (Flash-Behälter F4) entspricht mit 0,4 bar dem Ansaugdruckwert pS der ersten Kompressionsstufe (Kompressor C2) von ebenfalls 0,4 bar.

Weiterhin ist Kompressor C3, also der zweiten Kompressionsstufe, der Flash-Behälter F3, also die zweite für die Desorption von Kohlendioxid konfigurierte Druckentspannungsstufe, zugeordnet. Der Desorptionsdruckwert pD in der zweiten Druckentspannungsstufe (Flash-Behälter F3) entspricht im Sinne der Erfindung mit 1,3 bar dem Ansaugdruckwert pS der zweiten Kompressionsstufe (Kompressor C3) von 1,1 bar. Die Abweichung von 0,2 bar des Desorptionsdruckwerts entspricht einer Differenz von etwa 18 % gegenüber dem als Referenz gewählten Ansaugdruckwert pS.

Weiterhin ist Kompressor C4, also der dritten Kompressionsstufe, der Flash-Behälter F2, also die erste für die Desorption von Kohlendioxid konfigurierte Druckentspannungsstufe, zugeordnet. Der Desorptionsdruckwert pD in der ersten Druckentspannungsstufe (Flash-Behälter F2) entspricht mit 3,0 bar dem Ansaugdruckwert pS der zweiten Kompressionsstufe (Kompressor C3) von 2,8 bar. Die Abweichung von 0,2 bar des Desorptionsdruckwerts entspricht einer Differenz von etwa 7 % gegenüber dem als Referenz gewählten Ansaugdruckwert pS.

Aufgrund der erfindungsgemäßen Konfiguration werden die Kohlendioxidteilströme aus den Leitungen 15, 16 und 17 zu einem verdichteten Kohlendioxidgesamtstrom zusammengeführt, welcher nach Kühlung in Wärmeaustauscher H4 über Leitung 23 weitergeführt und einer Absorptionsmittelentfernungsvorrichtung zugeführt wird. Die Absorptionsmittelentfernungsvorrichtung weist als Komponenten zumindest einen Wäscher S (Gaswäscher) und eine Trocknungsvorrichtung D auf. Der Wäscher S ist beispielsweise als Waschkolonne konfiguriert, in welcher Methanol-Rückstände aus dem verdichteten Kohlendioxidgesamtstrom mit Hilfe von Wasser als Waschmittel im Gegenstromverfahren ausgewaschen wird. Das als Waschflüssigkeit resultierende Methanol-Wasser-Gemisch kann anschließend durch Destillation in einer Rektifikationskolonne zur Wiederverwendung als Absorptionsmittel und Waschmittel in die Bestandteile getrennt werden (nicht gezeigt). Eine Rektifikationskolonne (nicht gezeigt) ist üblicherweise Teil des Verfahrens, da kontinuierlich durch das Rohwasserstoffprodukt eingeschlepptes Wasser aus dem Absorptionsmittel-Kreislauf entfernt werden muss.

Der von Absorptionsmittelresten weitgehend befreite Kohlendioxidgesamtstrom wird aus dem Wäscher S abgezogen, und über Leitung 24 der Trocknungsvorrichtung D zugeführt. Der in Wäscher S behandelte Kohlendioxidgesamtstrom enthält noch Rückstände an Wasser, welche in der Trocknungsvorrichtung D entfernt werden. Die Trocknungsvorrichtung D weist beispielsweise ein Bett aus einem Adsorbens auf, welches Wasser bindet und regenerierbar ist. Bei dem Adsorbens kann es sich beispielsweise um ein Molekularsieb auf Zeolith-Basis handeln.

Der getrocknete, und von Absorptionsmittelresten befreite Kohlendioxidgesamtstrom wird als Kohlendioxidproduktstrom aus der Trocknungsvorrichtung D über Leitung 25 abgezogen. In einem letzten Verfahrensschritt wird der Kohlendioxidgesamtstrom in einem Kompressor C5 auf einen Enddruck von 20,3 bar verdichtet und optional nochmals gekühlt (nicht gezeigt), wodurch ein weiter verdichteter Kohlendioxidproduktstrom erhalten wird, der sich beispielsweise für eine unterirdische Lagerung (Sequestrierung) eignet.

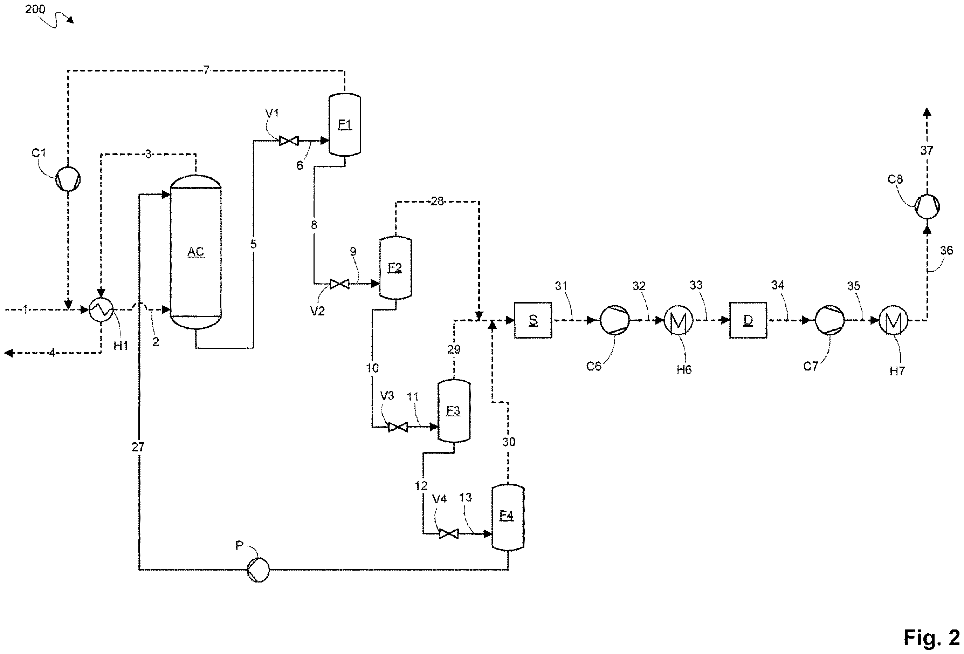

Figur 2 zeigt ein vereinfachtes Verfahrensfließbild 200 eines Verfahrens zur Abtrennung von Kohlendioxid (CO₂) aus einem Rohwasserstoffproduktstrom gemäß einem nicht erfindungsgemäßen Vergleichsbeispiel.

Ähnlich dem Verfahren 100 weist das Verfahren 200 eine Anordnung aus einer Absorptionskolonne AC und vier Flash-Behältern auf, deren Verschaltung und Funktion auf der Seite des Absorptionsmittels (Methanol) im Wesentlichen Verfahren 100 entspricht.

Die aus den Flash-Behältern F2, F3 und F4 abgezogenen Kohlendioxidteilströme werden gemäß Verfahren 200 jedoch vor einer Verdichtung zu einem (nicht verdichteten) Kohlendioxidgesamtstrom zusammengeführt, welcher einem Wäscher S zur Entfernung von Absorptionsmittelresten zugeführt wird. Wäscher S ist wie der Wäscher gemäß Verfahren 100 konfiguriert, wird jedoch bei wesentlich niedrigerem Druck betrieben. Der weitgehend von Absorptionsmittel (Methanol) befreite Kohlendioxidgesamtstrom wird über Leitung 31 aus dem Wäscher S abgezogen, in Kompressor C6 vorverdichtet, über Leitung 32 weitergeführt, und in Wärmeaustauscher H6 gekühlt. Der Kohlendioxidgesamtstrom wird anschließend über Leitung 33 einer Trocknungsvorrichtung D zugeführt, welche wie die Trocknungsvorrichtung D gemäß Verfahren 100 konfiguriert ist. Der von Absorptionsmittel befreite und getrocknete Kohlendioxidgesamtstrom wird anschließend über Leitung 34 weitergeführt und in Kompressor C7 weiter verdichtet. Der weiter verdichtete Kohlendioxidgesamtstrom wird ferner über Leitung 35 weitergeführt, in Wärmeaustauscher H7 gekühlt, und über Leitung 36 einem letzten Kompressor zur Verdichtung auf einen Enddruck von etwa 20 bar zugeführt. Dadurch wird ein verdichteter Kohlendioxidproduktstrom erhalten, der sich beispielsweise für eine unterirdische Lagerung (Sequestrierung) eignet.

Die folgende Tabelle basiert auf Simulationsdaten und zeigt die erfindungsgemäßen Vorteile des Verfahrens gemäß Figur 1, im Vergleich zum Vergleichsbeispiel repräsentiert durch Figur 2. Es wird die Produktion von 500 kNm³ Wasserstoff pro Stunde zugrunde gelegt, wobei das Synthesegas durch einen ATR Reaktor aus Erdgas erzeugt und anschließend geshiftet wird.

| **Zeile** | **Parameter** | **Einheit** | **Vergleichsbeispiel (****Figur 2****)** | **Beispiel Erfindung (****Figur 1****)** |
|---|---|---|---|---|
| 1 | Gesamtleistung Gaswäsche (Absorption und Flash-Behälter, ohne Kühlung Absorptionsmittel) | MW | 5,4 | 5,3 |
| 2 | Elektrische Kälteerzeugung | MW | 7,7 | 7,7 |
| 3 | Strom für CO₂-Kompressoren | MW | 26,9 | 22,6 |
| 4 | Gesamtleistung | MW | 40 | 36 |
| 5 | Kühlwasser gesamt | t/h | 2100 | 1800 |
| 6 | Thermische Energie | MW | 13 | 12,5 |
| 7 | Methanol im Kohlendioxidproduktstrom | ppmv | 160 | 170 |
| 8 | Frischwasser für den Wäscher S | kmol/h | 350 | 150 |

Die Simulationsdaten zeigen, dass insbesondere Einsparungen in Bezug auf die aufzuwendende elektrische Leitung für die Kompressoren erzielt werden (Zeile 3). Dadurch sinkt die für das Verfahren aufzuwendende Gesamtleistung (Zeile 4), insbesondere an elektrischer Energie, beträchtlich. Weiterhin wird für die Entfernung der Absorptionsmittelreste im Wäscher S eine beträchtlich geringere FrischwasserMenge (Zeile 8) benötigt, ohne dass die Qualität des Kohlendioxidproduktstroms in Bezug auf die im Kohlendioxidprodukt verbliebene Methanol-Konzentration (Zeile 7) signifikant sinkt. Durch die für das Auswaschen von Methanol geringere erforderliche Frischwassermenge wird auch weniger thermische Energie (Zeile 6) benötigt. Diese wird beispielsweise zum Trennen des im Wäscher S erzeugten Methanol-Wasser-Gemischs benötigt, beispielsweise beim Aufkochen des Gemischs im Sumpfbereich einer Rektifikationskolonne, in welcher die Reinkomponenten Methanol und Wasser zurückgewonnen werden. Ferner wird auch eine geringer Kühlwassermenge (Zeile 5) benötigt. Kühlwasser wird insbesondere für die Kühlung der Kohlendioxidströme benötigt, bevor diese in eine nachfolgende Kompressionsstufe eingeschleust werden können.

### Bezugszeichenliste

- 100: Verfahren (Erfindung)
- 200: Verfahren (Vergleichsbeispiel)
- 1-37: Leitung
- AC: Absorptionskolonne (Absorptionsstufe)
- C1-C8: Kompressoren
- F1-F4: Flash-Behälter (Druckentspannungsstufen)
- H1-H7: Wärmeaustauscher
- V1-V4: Druckentspannungsventile
- S: Wäscher
- D: Trocknungsvorrichtung
- P: Pumpe

## Patentansprüche

1. Verfahren zur Abtrennung von Kohlendioxid (CO₂) aus einem Rohwasserstoffproduktstrom, wobei der Rohwasserstoffproduktstrom zumindest Wasserstoff (H₂) und Kohlendioxid umfasst, aufweisend die Verfahrensschritte
a) Entfernen von Kohlendioxid aus dem Rohwasserstoffproduktstrom durch Absorption in einem Absorptionsmittel in einer Absorptionsstufe bei Absorptionsdruck, wodurch ein mit Kohlendioxid beladener Absorptionsmittelstrom und ein Wasserstoffproduktstrom erhalten werden, und wobei der Absorptionsdruck einen Absorptionsdruckwert pA aufweist;
b) Abziehen des mit Kohlendioxid beladenen Absorptionsmittelstroms und des Wasserstoffproduktstroms aus der Absorptionsstufe;
c) Entfernen von Kohlendioxid aus dem beladenen Absorptionsmittelstrom durch Desorption des Kohlendioxids aus dem beladenen Absorptionsmittel in einer Mehrzahl in Serie geschalteter Druckentspannungsstufen bei Desorptionsdruck, wodurch aus jeder der Druckentspannungsstufen ein Kohlendioxidteilstrom abgezogen wird, und wobei jede der Druckentspannungsstufen einen Desorptionsdruck mit einem Desorptionsdruckwert pD aufweist, welcher niedriger ist als der Absorptionsdruckwert pA, und wobei der Desorptionsdruckwert pD von Druckentspannungsstufe zu Druckentspannungsstufe in Flussrichtung des Absorptionsmittels abnimmt;
d) Verdichten der aus den Druckentspannungsstufen abgezogenen Kohlendioxidteilströme in einer Mehrzahl in Serie geschalteter Kompressionsstufen, wobei die Kohlendioxidteilströme zu einem Kohlendioxidgesamtstrom zusammengeführt werden, wodurch ein Kohlendioxidgesamtstrom erhalten wird,
und wobei jede der Kompressionsstufen einen Ansaugdruck mit einem Ansaugdruckwert pS aufweist, und der Ansaugdruckwert pS von Kompressionsstufe zu Kompressionsstufe in Flussrichtung des Kohlendioxidstroms zunimmt;
**dadurch gekennzeichnet, dass**
jeder Kompressionsstufe wenigstens eine Druckentspannungsstufe zur Desorption von Kohlendioxid zugeordnet ist, wodurch die Anzahl der Druckentspannungsstufen für die Desorption von Kohlendioxid mindestens der Anzahl der zugeordneten Kompressionsstufen entspricht, wobei der Gasauslass einer Druckentspannungsstufe mit der Saugseite einer ihr zugeordneten Kompressionsstufe fluidisch verbunden ist, und wobei der Ansaugdruckwert pS einer Kompressionsstufe dem Desorptionsdruckwert pD einer ihr zugeordneten Druckentspannungsstufe entspricht, und wobei
der Kohlendioxidgesamtstrom in einer den Kompressionsstufen nachgeschalteten Absorptionsmittelentfernungsvorrichtung behandelt wird, welche zur Entfernung von Absorptionsmittelresten aus dem Kohlendioxidgesamtstrom konfiguriert ist, wodurch ein Kohlendioxidproduktstrom erhalten wird.

2. Verfahren nach Anspruch 1, **dadurch gekennzeichnet, dass** der Ansaugdruckwert pS einer Kompressionsstufe und der Desorptionsdruckwert pD einer zugeordneten Druckentspannungsstufe den gleichen Wert mit einer maximalen Abweichung von 25 % aufweisen, insbesondere der Wert des Desorptionsdruckwerts pD um maximal 25 % höher ist als der Wert des zugeordneten Ansaugdruckwerts pS.

3. Verfahren nach Anspruch 1 oder 2, **dadurch gekennzeichnet, dass** die Anzahl der Druckentspannungsstufen für die Desorption von Kohlendioxid der Anzahl der zugeordneten Kompressionsstufen entspricht.

4. Verfahren nach einem der vorhergehenden Ansprüche, **dadurch gekennzeichnet, dass** der Desorptionsdruckwert pD einer Druckentspannungsstufe auf Basis des Ansaugdruckwerts pS derjenigen Kompressionsstufe festgelegt wird, welcher die Druckentspannungsstufe zugeordnet ist.

5. Verfahren nach einem der vorhergehenden Ansprüche, **dadurch gekennzeichnet, dass** in den Druckentspannungsstufen kein Erhitzen des beladenen Absorptionsmittels erfolgt, insbesondere kein Erhitzen bis zum Siedepunkt des Absorptionsmittels erfolgt.

6. Verfahren nach einem der vorhergehenden Ansprüche, **dadurch gekennzeichnet, dass** jede der Kompressionsstufen ein Verdichtungsverhältnis von 2,0 bis 4,0 aufweist, vorzugsweise ein Verdichtungsverhältnis von 2,5 bis 3,5 aufweist, weiter bevorzugt von 2,6 bis 3,3 aufweist.

7. Verfahren nach einem der vorhergehenden Ansprüche, **dadurch gekennzeichnet, dass** die Absorptionsmittelentfernungsvorrichtung einen Gaswäscher umfasst, wobei in dem Gaswäscher Absorptionsmittelreste mit Hilfe von Wasser aus dem Kohlendioxidgesamtstrom entfernt werden, und die Absorptionsmittelentfernungsvorrichtung eine dem Gaswäscher nachgeschaltete Trocknungsvorrichtung umfasst.

8. Verfahren nach Anspruch 7, **dadurch gekennzeichnet, dass** in dem Gaswäscher ein Methanol-Wasser-Gemisch erhalten wird, welches aus dem Gaswäscher abgezogen wird und anschließend
- Zur Absorptionsstufe zurückgeführt wird, oder
- einer thermischen Trennvorrichtung zugeführt wird, zur thermischen Trennung des Gemischs in Methanol und Wasser, und aus der thermischen Trennvorrichtung abgezogenes Methanol zur Absorptionsstufe zurückgeführt wird.

9. Verfahren nach einem der Ansprüche 1 bis 6, **dadurch gekennzeichnet, dass** die Absorptionsmittelentfernungsvorrichtung ein Adsorptionsmittelbett umfasst, wobei die Entfernung der Absorptionsmittelreste aus dem Kohlendioxidgesamtstrom durch Adsorption an dem Adsorptionsmittel des Adsorptionsmittelbetts erfolgt.

10. Verfahren nach einem der vorhergehenden Ansprüche, **dadurch gekennzeichnet, dass** das Verfahren drei Druckentspannungsstufen zur Desorption von Kohlendioxid aus dem beladenen Absorptionsmittelstrom umfasst.

11. Verfahren nach einem der vorgenannten Ansprüche, **dadurch gekennzeichnet, dass** die Desorptionsdruckwerte pD der für die Desorption von Kohlendioxid genutzten Druckentspannungsstufen in einem Bereich von 0,1 bis 6 bar liegen, vorzugsweise in einem Bereich von 0,4 bis 3,0 bar liegen.

12. Verfahren nach einem der vorhergehenden Ansprüche, **dadurch gekennzeichnet, dass** der Mehrzahl von Druckentspannungsstufen zur Desorption von Kohlendioxid eine weitere Druckentspannungsstufe zur Desorption von zumindest Wasserstoff aus dem beladenen Absorptionsmittel vorgeschaltet ist, wodurch ein Wasserstoffrückführstrom erhalten wird, der aus der Druckentspannungsstufe zur Desorption von Wasserstoff abgezogen wird, und wobei der Wasserstoffrückführstrom dem Rohwasserstoffproduktstrom zugeführt wird.

13. Verfahren nach einem der vorhergehenden Ansprüche, **dadurch gekennzeichnet, dass** der Absorptionsmittelentfernungsvorrichtung eine weitere Kompressionsstufe zur Kompression des Kohlendioxidproduktstroms nachgeschaltet ist.

14. Verfahren nach einem der vorhergehenden Ansprüche, **dadurch gekennzeichnet, dass** das Absorptionsmittel Methanol aufweist, insbesondere aus Methanol besteht.

15. Verfahren nach einem der vorgenannten Ansprüche, **dadurch gekennzeichnet, dass** stromabwärts zu der Mehrzahl in Serie geschalteten Kompressionsstufen und stromaufwärts zu der Absorptionsmittelentfernungsvorrichtung eine Nachverdichtungsstufe angeordnet ist, wobei die Nachverdichtungsstufe fluidisch mit der letzten der in Serie geschalteten Kompressionsstufen und mit der Absorptionsmittelentfernungsvorrichtung verbunden ist.

16. Verfahren nach einem der vorgenannten Ansprüche, **dadurch gekennzeichnet, dass** zwischen zwei der Mehrzahl in Serie geschalteten Kompressionsstufen eine Zwischenverdichtungsstufe angeordnet ist, wobei die Zwischenverdichtungsstufe fluidisch mit der ihr vorgeschalteten und der ihr nachgeschalteten Kompressionsstufe verbunden ist.
